# EUROPEAN PATENT APPLICATION

(11) **EP 0 949 483 A2**
(43) Date of publication of application: **13.10.1999**
(21) Application number: 99302764.8
(22) Date of filing: 08.04.1999
(51) Int. Cl.: G01C 22/00, G08C 23/04

(54) **Vehicle telemetry system**

(30) Priority: 08.04.1998 GB 9807439
(71) Applicant: Factorgraft Limited, Hertfordshire WD3 3EF (GB)
(72) Inventor: Martin, Peter Richard, Great Dunmow, Essex, CM6 1BY (GB)
(74) Representative: Jones, William

(57) **Abstract**

A vehicle telemetry system for use with circuit racing go-karts comprising:
a power supply;
a display unit;
a circuit mountable telemetry marker and
a telemetry sensor unit comprising an emitter means and a detector means to respectively first emit a source which is then reflected by the telemetry marker and detected by the detector means characterised in that the power supply, display unit and telemetry sensor as a init in use, are fitted to a vehicle thus making the vehicle telemetry marker truly passive.

## Description

### Field of the Invention

The present invention relates to a vehicle telemetry system for use with circuit racing go-karts comprising a power supply, a display unit, a circuit mountable telemetry marker and a telemetry sensor unit comprising an emitter means and a detector means to respectively first emit a source which is then reflected by the telemetry marker and detected by the detector means.

### Background Art Known to the Applicant

The leisure go-karting sector is a rapidly expanding market in both the United Kingdom and Europe. It caters for Corporate or individual hire, by providing all of the equipment and personnel necessary to stage a race meeting. The majority of the leisure go-karting circuits are indoor circuits of which there are approximately one hundred in the United Kingdom.

There are currently several commercially available systems designed to provide basic lap time information to the driver of a go-kart. These commercially available systems are active systems intended for the professional go-kart racer and professional circuits outdoor and they rely on track side beacons, that can be located on or near to the circuit in either a temporary or permanent manner. Two such commercially available systems are the "Hotlap" and "Pi Research" systems. These typically retail around the £2,500 and £160 mark respectively.

No such systems are currently in existence that are designed for the non-professional or leisure go-kart racer.

It is an object of the present invention to provide a low cost passive telemetry system for (initially) the indoor leisure go-kart racer.

### Brief Description of the Drawings

Preferred embodiments of the invention will now be more particularly described, by way of example only, with reference to the accompanying sheets of drawings wherein:

Figure 1 illustrates a plan schematic view of the technical layout of one embodiment of the present invention.

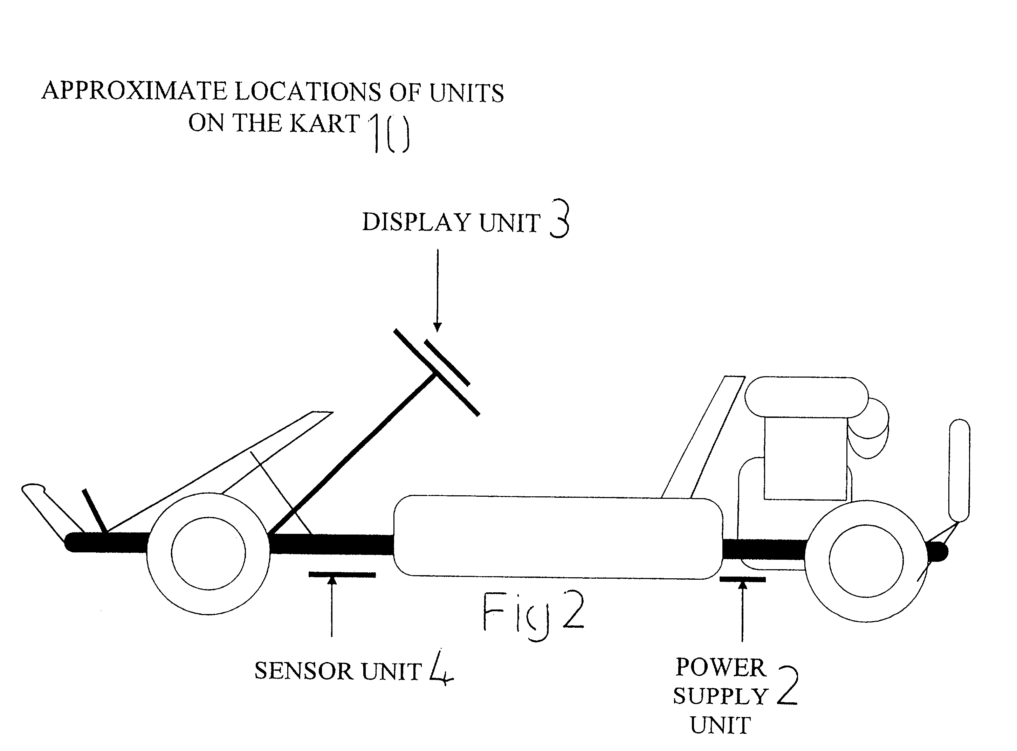

Figure 2 illustrates a side schematic view of a vehicle incorporating one embodiment of the present invention.

### Summary of the Invention

According to the present invention in its broadest aspect, there is provided a vehicle telemetry system for use with circuit racing go-karts comprising:
a power supply;
a display unit;
a circuit mountable telemetry marker and
a telemetry sensor unit comprising an emitter means and a detector means to respectively first emit a source which is then reflected by the telemetry marker and detected by the detector means characterised in that the power supply, display unit and telemetry sensor as a unit in use, are fitted to a vehicle thus making the vehicle telemetry marker truly passive.

The source is typically an electromagnetic source, preferably an infrared source.

Preferably, the sensor unit utilises a number of infra red emitters and detectors, the unit, in use, being fitted to the underside of the vehicle. This has the advantage of making the telemetry system virtually immune from daylight interference, obstruction by other vehicles, and spurious detections caused by stray illuminations.

Preferably, the sensor unit also incorporates daylight filters that further reduce the possibility of visible spectrum wavelength interference.

Preferably, the power supply, in use, derives its power from the ignition system of the vehicle whilst the vehicles engine is running. This negates the need for the use of batteries, in particular, batteries supplied for known telemetry systems for go-karts.

Preferably, the power supply, in use, is fitted to the underside of the vehicle. This further lowers the centre of gravity of the vehicle thus further minimising the risk of the vehicle overturning when it is on the circuit.

Preferably, the telemetry system is fitted with a smart card reader, insertion of a smart card being the means to actuate the telemetry system. The use of a smart card enables drivers and circuit operators of the system to benefit from the system without necessarily incurring the cost of ownership. The smart card being used as the payment method for the use of the system as well as the means of accessing the system.

Preferably, the smart card reader is fitted to the display unit.

Preferably, the sensor unit, in use, is disabled for a fixed period of time once the sensor unit has passed over a telemetry marker. This further reduces the risk of spurious detections and minimise power consumption of the system in use.

Preferably, the telemetry marker, in use, comprises a number of lines of varying thickness and spacing marked out on the circuit surface. These coded lines marked on the circuit are detected by the remaining aspects of the telemetry system that are fitted to the vehicle when the vehicle passes over it enabling the system to be described as purely passive.

Preferably, the lines are substantially orthogonal to the direction of travel of the sensor unit.

The invention includes within its scope a vehicle telemetry system substantially as herein described with reference to and as illustrated in any appropriate selection or combination of the accompanying Figures.

The invention also includes within its scope a vehicle fitted with a vehicle telemetry system as described herein above.

### Description of the Preferred Embodiments

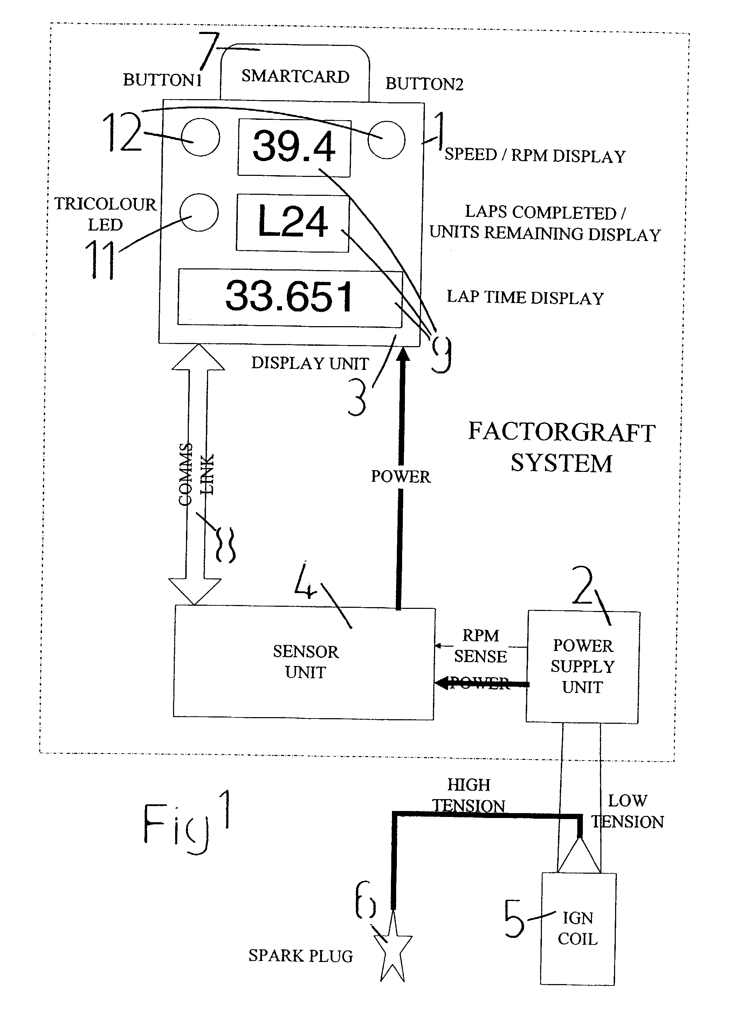

Figure 1 illustrates those components of the vehicle telemetry system that are fitted to the vehicle and those components are generally referenced 1. Those components are a power supply unit 2, a display unit 3 and a sensor unit 4. The means of actuating the system 1 is via the insertion of a smart card 7 into a smart card receiving unit located within the display unit 3.

The power supply unit 2 is operatively connected to the low-tension side of the ignition coil 5 (which in turn is connected to the spark plugs 6) of the engine of the vehicle (not illustrated). The display unit 3 is mounted on to the kart 10 using a standard three-hole fixing. The display unit 3 provides the man-machine interface for the system 1. Basic telemetry information e.g. measurement of lap time, speed, engine rpm and lap count is displayed to the driver of the vehicle in real time via segment like liquid crystal displays 9 and light emitting diodes 11 shown on the display unit 3. Alphanumeric characters are also supported by the liquid crystal displays to provide additional information to the driver of the vehicle. Two sealed switches 12 are provided for selecting certain display options to the driver of the vehicle, these options being on a "menu" basis.

The display unit 3 will comprise two printed circuit boards (PCB's). The first PCB is a display PCB. This contains the integrated circuit (IC) for the display driving function, liquid crystal displays, backlights, light emitting diodes and smart card receiver. The second PCB is a micro-controller PCB. This contains the micro-controller IC, EEPROM memory IC, switch interface circuitry, rechargeable battery, power supply and battery charging circuit, back light and light emitting diode driving circuits, smart card interface circuit, external interface circuit and physical connector for the display unit 3.

Known timing systems, regardless of where the active components are physically located require a power supply. Normally this power is supplied using batteries, particularly for equipment mounted on the kart 10. The shortcomings of batteries are well known, and therefore, are not repeated here, however, two key points are that they add to the cost of ownership (even if they are rechargeable) and are essential in portable equipment. The present system 1 derives its power indirectly from the kart engine through a power supply unit 2. As karts 10 are not fitted with alternators, generators or batteries, power is obtained from the ignition system whilst the engine is running. Battery power may also be provided, for example, when the engine is not running using a rechargeable battery to allow access to possibly more advanced features of the system 1.

The power supply unit 2 generates the power required for the system 1 from the low-tension side of the ignition coil 5. The basic operation of the power supply unit 2 is that additional current is taken from the low-tension side of the ignition coil 5 when the voltage exceeds a predetermined threshold. At the same time, a secondary output voltage is derived from the low-tension voltage. The additional current is used to create a stored charge that is then used to maintain the secondary voltage output during the period when the low tension coil voltage falls below the threshold value. The low-tension coil voltage is only below the threshold during and immediately after the ignition fires, thus generating a spark on the high-tension side of the ignition coil 5. For single cylinder kart engines with a relatively low maximum revolutions per minute, the large on duty cycle (non firing part) should provide ample time for the secondary circuit to store sufficient charge to compensate for the off part (firing part) of the duty cycle.

The secondary voltage is output directly as an unregulated output and following regulation as a high tolerance regulated output. The former is used for low tolerance applications that may require a nominally higher voltage, such as battery charging and liquid crystal display backlight illumination. The latter is used for the digital circuits, microprocessors, memory etc that require a much higher tolerance power supply.

The power supply unit 2, also contains the circuit that interfaces directly to the low tension side of the ignition coil 5, to determine the revolutions per minute of the engine. This circuit detects every time a spark is generated, by monitoring when the low-tension voltage crosses a predetermined threshold. This information is output to the sensor unit, for conversion into a revolutions per minute measurement by the micro-controller.

The power supply unit 2 comprises a single printed circuit board. The power supply PCB contains the unregulated and regulated power supply components as well as the interface circuit for revolutions per minute measurement.

The permanent connection to the ignition system also makes it possible for the system 1 to act as a tachometer or speedometer for single gear karts. The latter is derived measurement based on the gearing ratio and rolling diameter of the driving wheels. The algorithm that performs the conversion can be adjusted manually or automatically by calibration in the present system 1. The system 1 also provides a simple indication via a light emitting diode to the driver that the engine is running.

In alternative embodiments not illustrated, the power supply unit 2 may be physically combined with the sensor unit 4. For the avoidance of doubt, it should be stated that the power supply derived from the ignition coil 5 provides power for both the system 1 whilst operational and also power to recharge any battery power that may also be provided.

The sensor unit 4 like the power supply unit 2, in use, is mounted to the underside of the vehicle or in this particular instance, kart 10 in such a manner so as to have an unobstructed view of the circuit at a distance in the range of 5 - 20 cm. The sensor unit 4 is located in such a position to minimise the risk of accidental damage and the unit 2 comprises two infrared detectors aligned with the longitudinal axis of the kart 10 spaced (Nm + m/2) apart, where m is the minimum line width and N is an integer *(vide infra)*.Using this method, a line crossing is uniquely detected by a difference (01 or 10 code) between the two detector outputs when a suitable detection threshold is set.

The detector pair is duplicated in the same arrangement but the second pair of detectors (which need not be present in alternative embodiments not illustrated) are offset relative to the first detector pair to protect against localised obstruction of the timing line, or other failure of the first detector pair. The sensor unit 4 also incorporates the infrared emitter used to illuminate the circuit surface in order that the reflected infrared light can be detected. The relative positions of the sensor and detectors, together with the distance from the track, focus of the detectors, beam width and angle of the sensor are carefully arranged to ensure that the timing line (*vide infra)* can be reliably detected under all conditions with a minimum of spurious detections. The infrared emitter used in the detectors also incorporate daylight filters to further reduce the probability of spurious detections caused by stray illumination. These daylight filters being capable of blotting out all visible wavelengths.

The sensor unit 4 also contains the master timing reference for the system 1. This is automatically calibrated using a software algorithm to ensure that individual systems 1 meet the required relative timing accuracy. The sensor unit 4 measures the time interval between timing lines being crossed. This time is then corrected according to the calibration algorithm and the corrected time interval together with the line type is passed to the display unit 3 via the external interface 8. Using this method of operation, the sensor unit 4 can be used on circuits with a single timing line (total lap time) or multiple timing lines (part or split times) without modification (infra).

In order to further reduce the risk of spurious detections, and minimise power consumption, following the crossing of a timing line, the infrared emitter and detectors are disabled for a fixed period of time. This time period can be either set to the default value, or manually adjusted using the smart card calibration facility. The sensor unit 4 comprises a single PCB. The sensor PCB contains the micro-controller, master timing oscillator, infrared source, infrared detectors and external interfaces. The infrared emitter and detector support circuits may additionally contain a number of discrete components and/or integrated circuits to perform the power management and detection thresholding functions described above.

One of the preferred means of actuating the system 1 is via the use of a smart card 7 inserted into the system 1, preferably, inserted into the display unit 3 of the system 1. The use of such a smart card 7 enables the system 1 to be a so-called "pay per use" system. In this particular preferred embodiment, the smartcard 7 "enables" the system 1 but only the user interface part. The system 1, is in fact operational all of the time the engine is running. This is the method by which lifetime and use (and indeed audit) information can be obtained about each individual kart 10, as all laps are recorded internally rather than just those that have been paid for, and therefore, the related telemetry displayed to the driver.

The first format for the smart card 7 is a pre-payment smart card 7, available in a number of time denominations, inserted by an operator to enable the basic timing and display functions of the display unit 3. This type of smart card 7 is then decremented on a time basis while the system 1 is operational, and the card 7 is inserted. This type of decrement card is similar to the early style telephone cards that are purchased with a number of units already programmed on to the card 7. This type of smart card 7 is intended to be purchased by a driver or team and used in a single kart for the duration of an event.

Alternatively, a second type of smart card 7 could be used. This second smart card 7 is again a pre-payment smart card 7, but for this particular type, a number of units of time are decremented from the smart card 7 and transferred to the EEPROM memory. The smart card 7 can then be removed, having enabled the operation of the system 1 for a predetermined period of time. This type of smart card 7 is intended for use by frequent users or track operators, in order that they may offer inclusive (with telemetry) pricing to customers. This type of smart card 7 will allow a number of karts 10 to be "enabled". This type of card 7 is intended to be purchased and used by a circuit operator so that the equipment may be enabled on all karts 10 for a particular event.

Yet a further alternative type of smart card 7 envisaged, is a diagnostic smart card 7 provided for use by track operators. This contains no payment units but enables the display of diagnostic, lifetime and use information stored by the system 1.

A fourth type of smart card 7 is envisaged wherein the smart card 7 is a calibration smart card 7 provided for use by service personnel. This contains no payment units, but allows current calibration settings to be displayed and altered.

A fifth smart card 7 could be provided for calibration of the timing reference only and is intended for use during production, or exceptionally following unit 3 and 4 replacement or repair when in service.

One final smart card 7 could be provided for mere demonstration and testing purposes.

The smart card interface, i.e. that part of the display unit 3 that receives the smart card 7 is provided for payment collection and also as the method for accessing or enabling the advanced features of the system 1. Although the smart card interface is physically located in the display unit 3, alternative embodiments envisage the use of the smart card interface being housed in a remote hand-held unit capable of communicating with the display unit 3 via, for example, an infrared link.

Additional coding fields on any one of the types of card 7 described herein above could be programmed into the card 7 during manufacture, these particular fields being used to uniquely identify the card 7 type for its application and to reject all other card 7 types.

The display unit 3 designed to be mounted to either the dashboard of the kart 10 or the steering wheel of the kart 10 provides constant feedback to the driver of the kart 10 in advanced display units, it is intended that the difference in time between the current lap and the previous lap and also the fastest lap record in any one session could be displayed at the push of one of the buttons (button 1 or button 2 - as indicated in Figure 1). The relatively small size of the unit 3 will enable it to be centrally mounted on to the steering wheel of the kart 10 if that is the preferred mode of fitment. This has the distinct advantage that there is less difficulty in reading the display in the target environment when the driver is turning the wheel of the kart 10.

The reader is now referred back to the last paragraph of page 6 and the first paragraph of page 7 of the specification in relation to the present paragraph. In order for the sensor unit 4 to operate, an infrared beam emitted from the emitter needs to be reflected back and come into contact with a detector. In order to accomplish this, a number of lines of varying thickness and spacing are marked on to the race track or circuit surface. These are telemetry markers that form the passive remaining component of the system 1. In a preferred embodiment, these lines could be painted on to the track surface or alternatively, they could be sheets of material tacked on to the surface or alternatively, sheets of metal designed to reflect infrared radiation. These lines of varying thickness are orthogonal to the direction of travel of the sensor unit 4 once fitted to the kart 10. In other words, the sensor unit 4 will pass these lines of varying thickness or telemetry markers at substantially right angles. In this particular embodiment, up to four timing markers can be supported. These are distinguished by a different line code sequence. The implementation of the reflective telemetry marker as an array of line coded sequences distinguishes this particular type of marker from one that uses a simple single reflective marker. For the avoidance of doubt, the orientation, and location of the emitter, detector and telemetry marker are unique in that each kart 10 has an unobstructed and interference free view of the telemetry marker. This would not be the case for a beacon-based system in a race environment with many karts 10 in close proximity on the track.

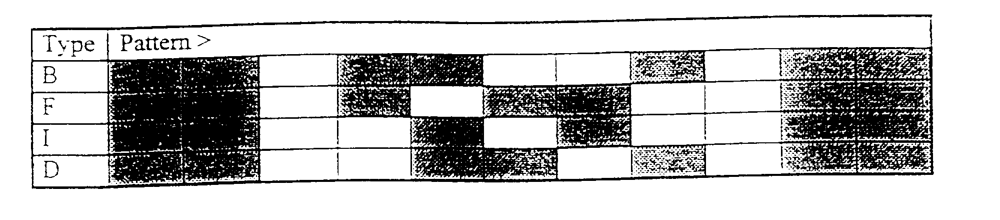

As can be seen, the line code sequence is created by the width and spacing of four lines. The minimum width of the lines or spaces is defined as m (normally 50mm) and is related to the detector spacing on the sensor unit 4. A combination of single and double width lines and spaces only is used to create the four timing marker codes. The codes are sufficiently different that a simple error correction algorithm can be used to detect and correct a number of simultaneous errors such that the correct code can be determined to a high degree of certainty.

The telemetry markers can be placed anywhere on the track to provide lap time information. In practice however, and in this embodiment, they are placed near the start/finish line to provide good agreement with the circuit timing system although their placing may be optimised to avoid existing surface markings or changes in track surface that may give a spurious detection.

During the installation phase, it is envisaged that the racetrack or circuit will be surveyed using a specially adapted kart or a hand-held detector to map such anomaly The telemetry markers can then be placed accordingly, or the programmable "inhibit" period that occurs following a valid timing marker a telemetry marker detection adjusted in software to mask out the anomaly Alternatively, the anomaly can be removed or permanently obscured.

Each line code as can be seen from the above table is eleven line widths in total, with a double width positive mark at either end to act as "framing marks". Types B, F and I are the primary codes with D available as an extra code is required.

The line codes and hence detection methods are represented in the above diagram in their simplest form. A practical implementation may necessarily be of a more complex form.

The system 1, which will be known commercially as "The Factorgraft System", is fitted only to the kart 10 without the need for any track side transmitting equipment. In this respect, the system 1 can be described as purely passive. All that is required is a number of coded lines marked on to the race track or circuit which are detected by the kart 10 when it passes over them. The technique for line detection uses an infrared emitter and two detectors mounted on the underside of the kart 10. The lines are coded to allow for a number of different line codes to be used on the same track. The code is generated by different widths of line material applied to the track surface, either by painting or surface dressing. The difference in reflectivity, between the materials to infrared light is used to generate corresponding detection patterns at the outputs of the two detectors. Measurement of engine revolutions per minute and also the main power supply is derived from the low-tension side of the ignition coil whilst the engine is running. At other times, for short periods only, the power supply may be derived from an additional rechargeable battery fitted as part of the system 1. The system derives its timing accuracy from an internal crystal oscillator. This is calibrated by software during installation to achieve the required accuracy over the lifetime of the system, ensuring consistency of timing between systems fitted to individual karts 10. Systems can also be re-calibrated in the field following system replacement or during routine maintenance. For the avoidance of doubt, the telemetry marker is required to indicate the kart 10 position on the race track. The elapsed time between consecutive recognitions of the same telemetry marker (and hence identical track position) are used to form the basis for the displayed lap time information. Clearly, if a number of timing telemetry markers are in use on the track then more complex timing information, such as split (partial lap times) times can be obtained.

For the avoidance of doubt, one form of the smart card 7 is in the form of a magnetic "swipe" card of the credit-card type.

## Claims

1. A vehicle telemetry system for use with circuit racing go-karts comprising:
a power supply;
a display unit;
a circuit mountable telemetry marker and
a telemetry sensor unit comprising an emitter means and a detector means to respectively first emit a source which is then reflected by the telemetry marker and detected by the detector means characterised in that the power supply, display unit and telemetry sensor as a unit in use, are fitted to a vehicle thus making the vehicle telemetry marker truly passive.

2. A vehicle telemetry system as claimed in Claim 1, characterised in that the electromagnetic source is an infrared source.

3. A vehicle telemetry system as claimed in either Claim 1 or Claim 2, characterised in that the sensor unit utilises a number of infra red emitters and detectors, the unit, in use, being fitted to the underside of the vehicle.

4. A vehicle telemetry system as claimed in any of the preceding Claims, characterised in that the sensor unit also incorporates daylight filters.

5. A vehicle telemetry system as claimed in any of the preceding Claims, characterised in that the power supply, in use, derives its power from the ignition system of the vehicle whilst the vehicle's engine is running.

6. A vehicle telemetry system as claimed in any of the preceding Claims, the power supply, in use, is fitted to the underside of the vehicle.

7. A vehicle telemetry system as claimed in any of the preceding Claims, the telemetry system being fitted with a smart card reader, with subsequent insertion of a smart card being the means to actuate the telemetry system.

8. A vehicle telemetry system as claimed in any of the preceding Claims, characterised in that the smart card reader is fitted to the display unit.

9. A vehicle telemetry system as claimed in any of the preceding Claims, characterised in that the sensor unit, in use, is disabled for a fixed period of time once the sensor unit has passed over a telemetry marker.

10. A vehicle telemetry system as claimed in any of the preceding Claims, characterised in that the telemetry marker, in use, comprises a number of lines of varying thickness and spacing marked out on the circuit surface.

11. A vehicle telemetry system as claimed in any of the preceding Claims, characterised in that the lines are substantially orthogonal to the direction of travel of the sensor unit.

12. A vehicle telemetry system as claimed in any of the preceding claims, characterised in that the detectors of the sensor unit are capable of reading the lines of varying thickness of the telemetry marker and once read, the detector is capable of converting this information into the display unit.

13. A vehicle telemetry system substantially as herein described with reference to and as illustrated in any appropriate selection or combination of the accompanying Figures.

14. A vehicle fitted with a vehicle telemetry system as claimed in any of the previous Claims.
